# EUROPEAN PATENT APPLICATION

(11) **EP 2 579 542 A1**
(43) Date of publication of application: **10.04.2013**
(21) Application number: 12186465.6
(22) Date of filing: 28.09.2012
(51) Int. Cl.: H04L 29/08

(54) **A method for dissemination of multimedia information through deployment of a decentralized peer-to-peer network and a decentralized network for implementation of the method**

(30) Priority: 04.10.2011 RU 2011140119
(71) Applicant: Obshchestvo s ogranichennoy Otvetstvennostyu "Setevisor", 115682 Moskva (RU)
(72) Inventor: Bunyayev, Svyatoslav Ivanovich, 117342 Moskva (RU); Gorshkov, Sergey Nikolayevich, 142435 d. Timokhovo, Moskovskaya oblast, Noginskiy rayon (RU); Koshelev, Vladlen Yuryevich, 140011 Moskovskaya oblast, g. Lubertsy (RU)
(74) Representative: Benatov, Emil Gabriel

(57) **Abstract**

The present invention relates to the field of computer networks and provides opportunity to improve the quality and reliability of the delivery of multimedia information stream to a user. The method of dissemination of multimedia information includes transmission of a requested multimedia information stream from a streamer node (3) through a public spreader node (2), wherein the initial stream is divided into segments based on the time of formation of these segments, with each segment assigned a unique and permanent identifier. Each segment is loaded into a storage buffer of the participant node, further copied to an execution buffer and finally the segment copied from the storage buffer is deleted at inexpedience of its further preservation. The decentralized network includes a set of nodes: participant network nodes (1₁... 1ₙ), public spreader nodes (2) providing retransmission of the multimedia information stream, streamer nodes (3₁... 3ₘ) providing broadcast of the multimedia information stream, channel provider nodes (4), stream broadcast configurator nodes (5).

## Description

The present invention relates to computer networks, namely, the invention relates to networks based on equality of participants.

Currently known and actively developed and used decentralized networks (peer networks, peer-to-peer networks), in which each node - a computer is selected to simultaneously act as a client and as a server, are used for exchange of files of various types intended for computing, modelling, and control of various processes. As an instance of such a network can be selected a network that provides for the dissemination of multimedia information files described, for example, in patents RU 2415514 and RU 2374681. A disadvantage of these networks is their inability to transfer streaming information in real time as well as decrease in transfer speed and service quality with significant increase in the number of network users.

In order to eliminate the above disadvantages of the prior art, the invention aims to provide an opportunity to improve the delivery quality of a multimedia information stream when broadcasted in the presence of large number of users in a decentralized network, which is important when increasing the number of users of the decentralized network, and will provide service continuity. Generally, the invention will contribute to expansion of the technical means used for operation of decentralized networks, as well as increasing the reliability of the decentralized network compared to analogues.

The above described technical result is going to be achieved by using the proposed method for dissemination of multimedia information through deployment of a decentralized peer-to-peer network by using an appropriate decentralized network.

The method for dissemination of multimedia information is based on deployment of a decentralized peer-to-peer network, including at least one participant network node connected via at least one public spreader node to at least one streamer node providing broadcast of the multimedia information stream. During the implementation of the method with the network nodes, the demanded multimedia information stream is requested. Consecutive connection of the participant node is performed to at least one channel provider node and to at least one stream broadcast configurator node. Further, the requested multimedia information stream is transmitted from the streamer node to at least one connection through a public spreader node. During the transmission, the initial stream is divided into segments based on the time of formation of these segments, with each segment assigned a unique and permanent identifier and each segment loaded into a storage buffer of the participant node, further copied to an execution buffer and finally the segment copied from the storage buffer is deleted at inexpedience of its further preservation. When a public spreader node is inaccessible, the participant node connects to at least one stream broadcast configurator node. The participant node may connect, at regular intervals, to at least one node of statistics and exchange of service information. If the transmission of the broadcasting stream is impossible to all public spreader nodes, at least one public spreader node can connect to at least one private spreader node. A public and / or a private spreader node, in case of inaccessibility of the streamer node, can connect to at least one backup streamer node.

The decentralized network includes at least one participant network node. In this case, at least two participant nodes connect to each other. Also, the decentralized network includes at least one public spreader node, which provides retransmission of at least one multimedia information stream, and which is connected to the participant network node, and at least one streamer node, which provides broadcasting of a single multimedia information stream, and which is connected to the spreader node. For performance control, the network is allocated to at least one channel provider node, which is connected to the participant network node, and at least one stream broadcast configurator node connected to the participant network node. In addition, the network can include at least one node of statistics and exchange of service information connected to the participant network node, at least one private spreader node connected to the public spreader node, and also at least one backup streamer node, which provides broadcasting of a single multimedia information stream, which is connected to the public and / or private spreader nodes, when a connection to the primary streamer node is unavailable. The statistics node, the participant network node, and the public and / or private spreader node are selected for exchange of service information.

The proposed network consists of a set of equally privileged participant network nodes (peers) 1₁... 1ₙ, each node providing opportunity for interaction with similar participant network nodes. Participant network nodes may be desktop or portable personal computers, programmable mobile terminals connected to wired or wireless networks, as well as various household or specialized multimedia devices (TVs, multimedia consoles, etc.). Each of the network nodes 1₁... 1ₙ can be connected to any public node of the decentralized network , except for the streamer nodes, namely, any node (corresponding server) of a public spreader 2, retransmitting multimedia information streams, requested from the streamer nodes (corresponding streamer servers) 3₁... 3ₘ, allocated according to the information stream. For performance control, the network is allocated to nodes executed on one or more servers and accessible from any of the participant nodes1₁... 1ₙ: a channel provider node 4, a stream broadcast configurator node 5, and a statistics node (big brother) 6. The statistics node 6 provides collection of statistical data used to assess the performance of the network, and also the exchange of addresses between network participants, characteristics of the participant network nodes 1₁... 1ₙ, and the configuration data. The optimal performance of the network is provided by nodes (corresponding servers) of the private spreader 7, connected to nodes (corresponding servers) of the public spreader 2. Also, continuity of the network performance is provided by nodes (corresponding servers) of the backup streamer 8 connected exclusively to public 2 or private 7 spreader nodes.

When connecting network nodes to each other for downloading stream segments, exchange of service information is accomplished, determining the network configuration at the time of publication of a corresponding segment, and also exchange of lists of network nodes known to participate in the connection.

After deployment of the decentralized network, including the nodes listed above, any of the network nodes 1₁... 1ₙ can be requested by a user of the multimedia information stream (video and audio content, etc.). The requested multimedia information stream is transmitted from the selected streamer node 3 through the public spreader node 2. During the transmission, the initial broadcasting stream is divided into segments based on the time of formation of these segments, with each segment assigned a unique and permanent identifier that contains information for the period of use of the segment in the network. On admission to a participant network node 1, each segment is loaded into a storage buffer of the participant node 1, further copied to an execution buffer and finally the segment copied from the storage buffer is deleted at inexpedience of its further preservation (exceeding the defined period of a segment usage, storage buffer overflow, etc.). When a stream broadcast is requested, participant node 1 connects to the channel provider node 4 for requesting a channel with a corresponding identifier. A participant receives a channel identifier during the session initialization viewed by the user, for example, within the web-client parameters, within the DLNA request parameters of the TV set, or similar methods. After connecting to the channel provider node or inaccessibility of the public spreader node 2 during processing, the participant node 1 connects to the stream broadcast configurator node 5. In addition, the participant nodes connect at regular intervals to the statistics node 6. If the transmission of the broadcasting stream is impossible to all public spreader nodes, public spreader node 2 connects to a private spreader node 7, in turn, the public 2 and / or the private 7 spreader node, in case of inaccessibility of the streamer node, connect to the backup streamer node 8.

Thus, the proposed method for dissemination of multimedia information through deployment of a decentralized peer-to-peer network, and also a decentralized network providing the implementation of the proposed method, ensures a reliable and fast delivery of multimedia information to a user.

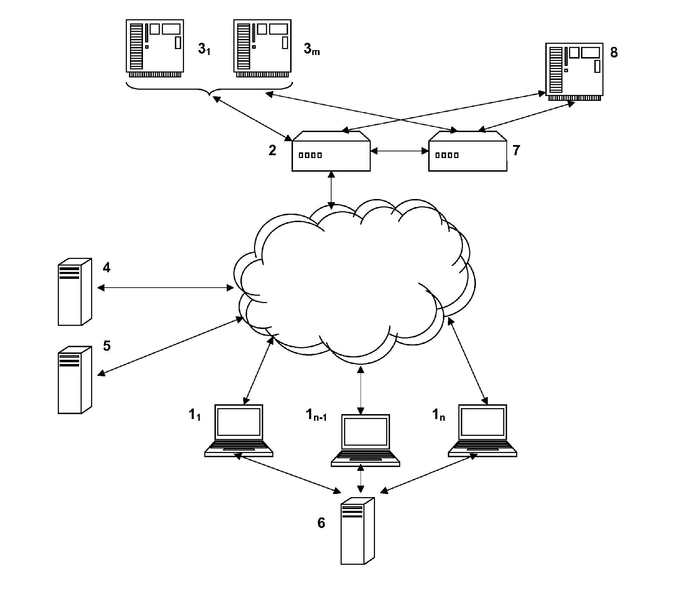

## Claims

1. A method for dissemination of multimedia information comprising:
deployment of a decentralized peer-to-peer network, comprising at least one participant network node (1₁... 1ₙ) connected through at least one public spreader node (2) to at least one streamer node (3₁... 3ₘ) providing broadcast of a multimedia information stream;
requesting a demanded multimedia information stream from a participant network node (1);
connecting consecutively the participant network node (1) to at least one channel provider node (4) and to at least one stream broadcast configurator node (5);
transmitting the requested multimedia information stream from a streamer node (3₁... 3ₘ) to the participant network node (1₁... 1ₙ) by at least one connection through a public spreader node (2), wherein:
the stream is divided initially into segments based on time of formation of the segments, with each segment assigned a unique and permanent identifier; and
each segment is loaded into a storage buffer of the participant node, further copied to an execution buffer and finally the segment copied from the storage buffer is deleted at inexpedience of its further preservation.

2. The method according to claim 1, wherein the participant network node (1) connects at regular intervals to at least one statistics node (6).

3. The method according to claim 1, wherein if the transmission of the stream is impossible to all public spreader nodes (2), at least one public spreader node (2) connects to at least one private spreader node (7).

4. The method according to claim 1 or 3, wherein in case of inaccessibility of the streamer node (3), the public (2) and/or private (7) spreader node connects to at least one backup streamer node (8).

5. The method according to claim 1 or 3, wherein in case of inaccessibility of the public spreader node (2), the participant network node (1) connects to at least one stream broadcast configurator node (5).

6. The method according to claim 1 or 3, wherein the participant network node (1) and /or the public spreader node (2) provide exchange of service information through a statistics node (6).

7. A decentralized network comprising:
at least one participant network node (1₁... 1ₙ);
at least one public spreader node (2) providing retransmission of at least one multimedia information stream and connected to the participant network node (1₁... 1ₙ);
at least one streamer node (3₁... 3ₘ) providing broadcast of the multimedia information stream, connected to the at least one public spreader node (2);
at least one channel provider node (4) connected to the participant network node (1₁... 1ₙ); and
at least one stream broadcast configurator node (5) connected to the participant network node (1₁... 1ₙ).

8. The network according to claim 7, wherein two or more participant network nodes (1₁... 1ₙ) are connected to each other.

9. The network according to claim 7, further comprising at least one statistics node (6) connected to the participant network node (1).

10. The network according to claim 7, further comprising at least one private spreader node (7) connected to the public spreader node (2).

11. The network according to claim 7 or 10, further comprising at least one backup streamer node (8) providing broadcast of the multimedia information stream, connected to the public (2) and/or private (7) spreader, when a connection to the main streamer node (3) is unavailable.

12. The network according to claim 7 or 10, wherein the statistics node (6), the participant network node (1), and the public (2) and/or private (7) spreader node are selected for providing exchange of service information.
